# EUROPÄISCHE PATENTSCHRIFT

(11) **EP 1 725 604 B1**
(45) Veröffentlichungstag und Bekanntmachung des Hinweises auf die Patenterteilung: **29.04.2009**
(21) Anmeldenummer: 05758609.1
(22) Anmeldetag: 25.02.2005
(51) Int. Cl.: C08G 69/44, C08G 83/00, C08G 81/00

(54) **ESTERVERKNÜPFUNGEN AUFWEISENDE CARBONSÄUREVERBINDUNGEN UND DARAUS HERGESTELLTE POLYAMIDE**
CARBOXYLIC ACID COMPOUNDS COMPRISING ESTER BONDS AND POLYAMIDES PRODUCED THEREFROM
COMPOSES D'ACIDE CARBOXYLIQUE PRESENTANT DES LIAISONS ESTER ET POLYAMIDES PRODUITS A PARTIR DE CES COMPOSES

(30) Priorität: 06.03.2004 DE 102004011008
(43) Veröffentlichungstag der Anmeldung: 29.11.2006
(73) Patentinhaber: LANXESS Deutschland GmbH, 51369 Leverkusen (DE)
(72) Erfinder: VAN MULLEKOM, Robert, Hubertus, 5911 AL Venlo (DE); SCHÄFER, Marcus, 47829 Krefeld (DE); JOACHIMI, Detlev, 47800 Krefeld (DE)
(86) Internationale Anmeldenummer: PCT/EP2005/001979
(87) Internationale Veröffentlichungsnummer: WO 2005/090441

(56) Entgegenhaltungen:
- EP-A- 0 774 480
- EP-A- 1 078 949
- US-A- 5 310 943
- MUSCAT D ET AL: "HYPERBRANCHED POLYESTERAMIDES - NEW DENDRITIC POLYMERS" TOPICS IN CURRENT CHEMISTRY, SPRINGER, BERLIN, DE, Bd. 212, 2001, Seiten 41-80, XP001068479 ISSN: 0340-1022 in der Anmeldung erwähnt

## Beschreibung

Die vorliegende Erfindung betrifft Esterverknüpfungen aufweisende Carbonsäureverbindungen und die daraus hergestellten sternförmig verzweigten Polyamide, sowie Verfahren zu tihrer Herstellung. Die erfindungsgemäßen sternförmig verzweigten Polyamide zeichnen sich durch ein verbessertes Verarbeitungsverhalten aus.

Polyamide zeichnen sich durch eine Vielzahl vorteilhafter Eigenschaften wie z. B. hohe Zähigkeit, hohe Temperaturfestigkeit u.a. aus, die ihnen im Bereich der technischen Thermoplaste einen festen Platz im Markt sichern. Diese Basiseigenschaften von Polymeren werden im All gemeinen durch die Zugabe von Zusatzstoffen oder Additiven modifiziert. Polymer und Additive zusammen ergeben die sogenannten Formmassen. Polyamidformmassen kommen in vielen Anwendungen zum Einsatz. Beispielhaft genannt seien die Formteile oder Spritzgussteile z.B. für den Automobilmarkt oder Extrudate wie Folien oder Hohlkörper für den Verpackungsbereich.

Zur mechanischen Verbesserung von Polyamid beinhalten diese Verbindungen oft Füllstoffe, beispielsweise Glasfasern, Wollastonit, Kaolin oder Calciumcarbonat. Diese Füllstoffe können zu einer Erhöhung der Schmelzviskosität der Formmasse führen und begrenzen die Fließfähigkeit dieser Formmassen. Eine hohe Fließfähigkeit ist aber für die gleichmäßige und vollständige Füllung einer Form, sowie für die Reduktion von Zykluszeiten und der Fülldrucke bei der Spritzgußverarbeitung vorteilhaft. Um die hohe Fließfähigkeit der Polyamidformmassen bei der Spritzgußverarbeitung zu gewährleisten, ist eine möglichst geringe Schmelzviskosität des eingesetzten Polyamidharzes erforderlich.

Die Verringerung der Schmelzviskosität eines Polyamidharzes kann über eine Verringerung des Molekulargewichtes, wie z.B. in Patentschrift US-A 5 274 033 beschrieben, erfolgen. Nachteilig dabei ist aber der negative Einfluss auf die mechanischen Eigenschaften des Werkstoffes, beispielsweise die Verringerung der Schlagzähigkeit, die mit dem verringerten Molekulargewicht einhergeht.

Aus Schaefgen, Flory, J. Am. Chem. Soc, 70 (1948), 2709-2718 ist die Herstellung von sternförmig verzweigten Polyamiden aus Caprolactam, Wasser und einem Verzweiger mit 4 oder mehr Carbonsäuregruppen bekannt.

Aus US-A 5 346 984 (= DE-A 4312182) ist bekannt, dass ein sternförmig verzweigtes Polyamid 6, hergestellt aus einem Verzweiger mit mehr als 3 Carbonsäuregruppen, eine signifikante Reduktion der Schmelzviskosität aufweist, während die übrigen Eigenschaften sich nicht oder nur geringfügig verändern.

Zur Verbesserung der Fließfähigkeit einer Polyamidformmasse soll die Reduktion der Schmelzviskosität eines Polyamid -6-Harzes deswegen bevorzugt über die sternförmige Verzweigung der Polyamidketten erfolgen. Auf diese Art und Weise bleiben die wünschenswerten Polymereigenschaften erhalten.

Dieser Lösungsansatz ist deshalb Bestandteil von weiteren Patentanmeldungen z.B. WO-A 96/35739 und WO-A 97/24388 worin Polyamide beschrieben werden, die durch die Polymerisation von Lactamen oder Aminocarbonsäuren in Anwesenheit einer Kernverbindung mit 3 oder 4 Carbonsäuregruppen erhalten werden. Aus EP-A 0 774 480 ist ein Verfahren zur Herstellung verzweigter Polyamide unter Einsatz mehrfunktioneller Carbonsäuren bekannt, wobei die Anzahl n in den freien Carbonsäuregruppen 3 < n < 10 beträgt.

Folglich haben Verbindungen mit 3 oder mehr Carbonsäurengruppen eine große Bedeutung für die Synthese von leichtfließenden Polyamiden.

Die im oben aufgeführten Stand der Technik eingesetzten Kernverbindungen zeigen aber einige Nachteile:
- Sie müssen in relativ hohen Konzentrationen der Polyamid-Polymerisation zugesetzt werden um einen Effekt zu bewirken, was zu einem unerwünscht hohen Fremdmonomeranteil führt
- Die Synthese der Kernverbindungen findet in verdünnter Lösung statt und/oder die Ausgangsverbindungen sind in großtechnischem Maßstab nicht oder nur schwer verfügbar und/oder handhabbar. Die industrielle Herstellung der entsprechenden Polyamide ist deshalb aus wirtschaftlichen und/oder sicherheitstechnischen Gesichtspunkten nicht vertretbar.

Aufgabe der vorliegenden Erfindung war deshalb die Bereitstellung neuer und einfach zugänglicher Verbindungen zur Erhöhung der Fließfähigkeit von Polyamiden, die als sogenannte Kernverbindungen in deutlich geringerer Konzentration bei der Herstellung von Polyamiden eingesetzt werden können.

Einfach zugänglich im Sinne der vorliegenden Erfindung heißt, dass die erfindungsgemäß bereitzustellenden Verbindungen in einem einfachen Schritt, ohne zusätzliches Lösemittel, ohne weitere Aufarbeitung und in großtechnischen Mengen verfügbaren Ausgangsstoffen herstellbar sein sollten.

Die Lösung der Aufgabe und somit Gegenstand der vorliegenden Erfindung sind sternförmig verzweigte Polyamide mit mindestens 3 Polyamidarmen, **dadurch gekennzeichnet, dass** als Polymerisationskern Kernverbindungen mit 3 oder mehr Carbonsäuregruppen und mit einer esterverknüpften Struktur der allgemeinen Formel (I) 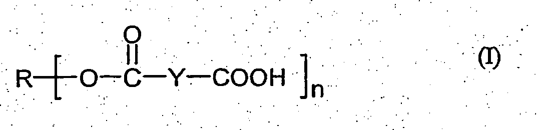 eingesetzt werden, worin
- R und Y: für aliphatische und/oder aromatische Kohlenstoffreste mit 2 bis 30 Kohlenstoffatomen und gegebenenfalls weiteren Heteroatomen stehen und
- n: für eine ganze Zahl von 3 bis 10 steht.

Überraschenderweise eignen sich die Verbindungen der allgemeinen Formel (I) zum Einsatz als Polymerisationskern in sternförmig verzweigten Polyamiden, indem sie deren Fließfähigkeit deutlich verbessern und zudem einfach herzustellen sind. Der Einsatz der Verbindungen der allgemeinen Formel (I) als Polymerisationskern ist für den Fachmann umso mehr überraschend, als dass er davon ausgehen musste, dass diese Esterverbindungen die Bedingungen bei der Polymerisation von Polyamiden (hohe Temperaturen, Anwesenheit von Wasser) nicht überstehen.

Die vorliegende Erfindung betrifft deshalb auch die Verwendung von Verbindungen der allgemeinen Formel (I) 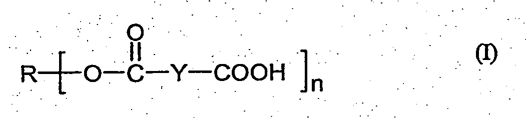 worin
- R und Y: für aliphatische und/oder aromatische Kohlenstoffreste mit 2 bis 30 Kohlenstoffatomen und gegebenenfalls weiteren Heteroatomen stehen und
- n: für eine ganze Zahl von 3 bis 10 steht,
zur Synthese verzweigter Polyamide mit mindestens 3 Polyamidarmen.

In bevorzugter Weise werden die Verbindungen der Formel (I) dabei zu 0,01 bis 0,4 mol-%, besonders bevorzugt zu 0,03 bis 0,3 mol-% bezogen auf die Gesamtmenge Monomer eingesetzt.

Die vorliegende Erfindung betrifft aber auch Formteile und Fasern auf Basis von Polyamid, **dadurch gekennzeichnet, dass** ein sternförmig verzweigtes Polyamid mit mindestens 3 Polyamidarmen eingesetzt wird, das aus esterverknüpften Verbindungen der allgemeinen Formel (I) 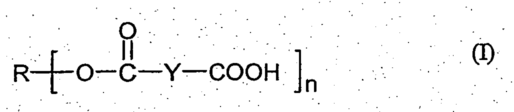 worin
- R, Y, und n: die oben genannten Bedeutungen haben,
eingesetzt wird.

Fasern auf Basis von Polyamid im Sinne der vorliegenden Erfindung sind über dem Fachmann bekannte Spinnverfahren erhältlich.

Formteile auf Basis von Polyamid im Sinne der vorliegenden Erfindung sind Spritzgussteile, bevorzugt für die Elektronikindustrie oder für den Automobilmarkt, oder Extrudate, bevorzugt Folien oder Hohlkörper, bevorzugt für den Verpackungsbereich. Die Formteile können gegebenenfalls Füllstoffe wie z.B. Glasfasern, Wollastonit, Kaolin oder Calciumcarbonat sowie weitere Additive wie z.B. Nukleierungsmittel, Farbstoffe und -Pigmente und Entformungsmittel beinhalten.

In einer bevorzugten Ausführungsform der vorliegenden Erfindung stehen in der Formel (I) der vorliegenden Erfindung
- R: für aliphatische und/oder aromatische Kohlenstoffreste mit 2 bis 20 Kohlenstoffatomen und gegebenenfalls weiteren Heteroatomen wie Stickstoff, Sauerstoff, Phosphor oder Schwefel,
- Y: für aliphatische und/oder aromatische Kohlenstoffreste mit 2 bis 20 Kohlenstoffatomen und gegebenenfalls weiteren Heteroatmen wie Stickstoff, Sauerstoff, Phosphor oder Schwefel und
- n: für eine ganze Zahl von 3 bis 10.

Esterverknüpfte Verbindungen gemäß der allgemeinen Formel (I) sind teilweise aus DE-A 2 411 480 bekannt, wo sie in Reinigungsmittelmischungen eingesetzt werden. In WO-A 00/59982, werden esterverknüpfte Verbindungen der allgemeinen Formel (I) in der Synthese von hyperverzweigten Polyestern eingesetzt.

Neu und noch nicht im Stand der Technik beschrieben sind Verbindungen der Formel (I) auf Basis von Dipentaerythrit der allgemeinen Formel (II) 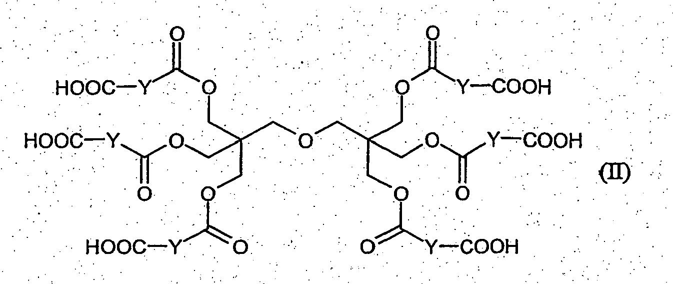 worin
- Y: für aliphatische und/oder aromatische Kohlenstoffreste mit 2 bis 30 Kohlenstoffatomen und gegebenenfalls weiteren Heteroatomen steht, davon ausgenommen die Verbindungen worin
i. Y für -CH₂CH₂CH₂CH₂- oder
ii. Y für 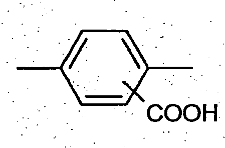 oder
iii. Y. für 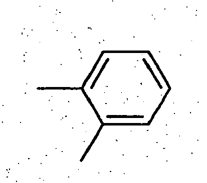 steht.

In einer bevorzugten Ausführungsform der vorliegenden Erfindung werden deshalb Verbindungen der Formel (II) als Kernverbindungen eingesetzt, worin Y für aliphatische und/oder aromatische Kohlenstoffreste mit 2 bis 30 Kohlenstoffatomen und gegebenenfalls weiteren Heteroatomen steht.

In einer besonders bevorzugten Ausführungsform werden Verbindungen der Formel (II) als Kernverbindungen eingesetzt, worin Y für aliphatische und/oder aromatische Kohlenstoffreste mit 2 bis 20 Kohlenstoffatomen und gegebenenfalls weiteren Heteroatomen steht.

Die vorliegende Erfindung betrifft besonders bevorzugt neue als Kernverbindungen für die Synthese von Polyamiden einzusetzende Verbindungen der Formel (II) worin Y für aliphatische Kohlenstoffreste mit 2 bis 20 Kohlenstoffatomen und gegebenenfalls weiteren Heteroatomen steht, wovon Y = -CH₂CH₂CH₂CH₂- ausgenommen ist.

Ebenfalls neu und noch nicht im Stand der Technik beschrieben sind die Verbindungen der Formel (I) auf Basis von Tripentaerythrit der allgemeinen Formel (III) 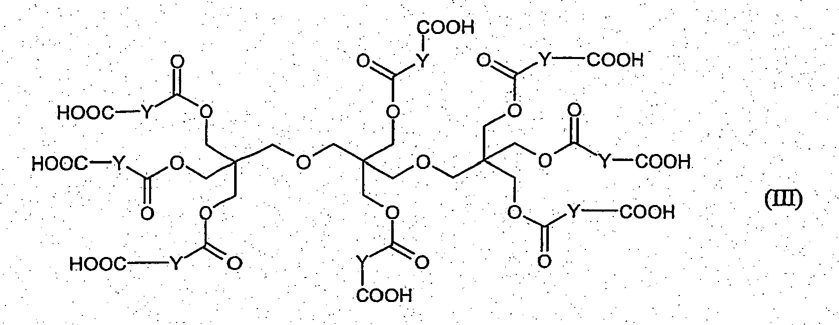 worin
- Y: für aliphatische und/oder aromatische Kohlenstoffreste mit 2 bis 30 Kohlenstoffatomen und gegebenenfalls weiteren Heteroatomen steht.

In einer bevorzugten Ausführungsform der vorliegenden Erfindung werden deshalb Verbindungen der Formel (III) als Kernverbindungen eingesetzt, worin Y für aliphatische und/oder aromatische Kohlenstoffreste mit 2 bis 20 Kohlenstoffatomen und gegebenenfalls weiteren Heteroatomen steht.

Neu und Gegenstand der vorliegenden Erfindung sind die Verbindungen der Formeln (IV) und (V), die in einer ganz besonders bevorzugten Ausführungsform der vorliegenden Erfindung als Kernverbindungen für die Synthese von Polyamiden eingesetzt werden können. Es handelt sich hierbei um zwei Spezies der Formel (I), ohne dass ihr Einsatz als Kernverbindungen für die Polyamidsynthese allein auf diese Anwendung beschränkt wäre.

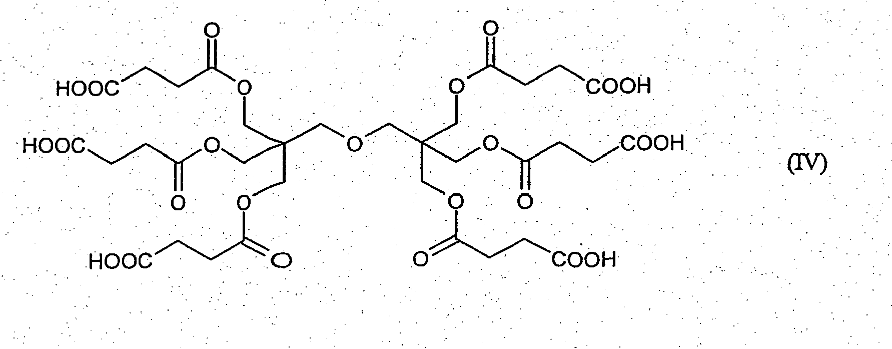

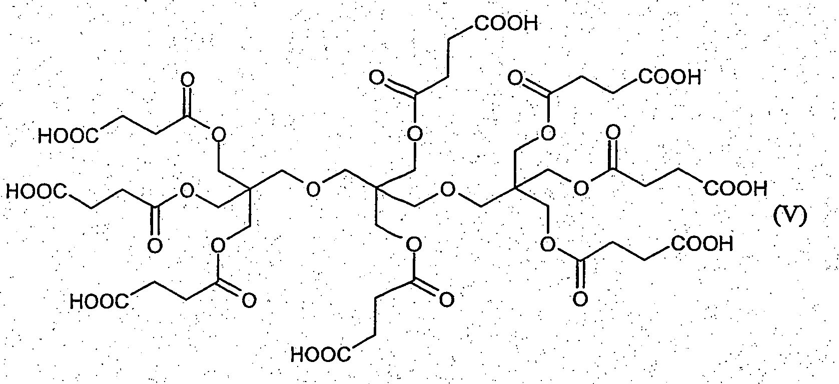

Erfindungsgemäß mit den Verbindungen der Formel (I) bzw. den von Formel (I) abgeleiteten Verbindungen der Formeln (II) bis (V) als Polymerisationskern zu synthetisierende Polyamide sind über die Polymerisation von Aminocarbonsäuren, beispielsweise Aminohexansäure, oder die Ringöffnung von Lactamen, beispielsweise Caprolactam und Laurinlactam erhältlich. Die vorliegende Erfindung betriff deshalb auch ein Verfahren zur Herstellung sternförmig verzweigter Polyamide mit mindestens 3 Polyamidarmen, **dadurch gekennzeichnet, dass** man als Polymerisationskern esterverknüpfte Verbindungen der allgemeinen Formel (I) 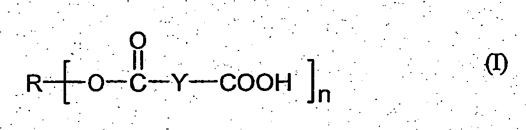 worin
- R, Y und n: die oben genannten Bedeutungen haben,
einsetzt und eine Polymerisation von Aminocarbonsäuren oder eine Ringöffnung von Lactamen durchführt. Selbstverständlich können auch sternförmig Verzweigte Polyamide mit mindestens 3 Polyamidarmen durch Kernverbindungen der Formel (II) bis (V) mit Polymerisation von Aminocarbonsäuren oder durch Ringöffnung von Lactamen durchgeführt werden.

Die erfindungsgemäß als Polymerisationskern mit esterverknüpfter Struktur einzusetzenden Verbindungen der allgemeinen Formel (I) erhält man durch ein Verfahren, **dadurch gekennzeichnet, dass** man tri- oder höherfunktionelle Alkohole oder Alkoholate der allgemeinen Formel (VI)

R(-OZ)ₙ (VI)

worin R und n die oben angegebenen Bedeutungen haben und Z für Wasserstoff oder für ein Alkalimetall, bevorzugt Natrium oder Kalium, steht,
mit einem zyklischen Anhydrid der allgemeinen Formel (VII) 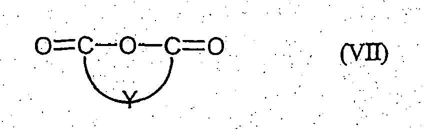 worin
- Y: die oben angegebene Bedeutung hat, gemäß der Reaktionsgleichung: 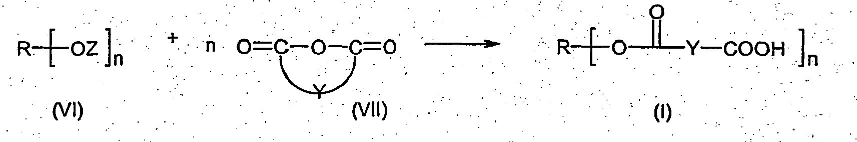
umsetzt.

Beispiele für höherfunktionelle aromatische Alkohole oder Alkoholate der Formel (VI) sind Phloroglucin, Pyrogallol, Hydroxyhydrochinon, Phloroglucid oder deren Alkalisalz.

Beispiele, für höherfunktionelle heterozyklische Alkohole oder Alkoholate der Formel (VI) sind Isobarbitursäure und Cyanursäure oder deren Alkalisalze.

Beispiele für höherfunktionelle aliphatische Alkohole oder Alkoholate der Formel (VI) sind Trioxyisobutan, Glycerin, Diglycerin, Triglycerin, Polyglycerin, Trimethylolethan, Trimethylolpropan, Ditrymethylolethan, Ditrimethylolpropan, Erythrit, Pentaerythrit, Dipentaerythrit, Tripentaerythrit, Galactit, Arabit, Adonit, Mannit, Sorbit, Xylit und Methylglucosid sowie Aminoalkohole wie Trimethanolamine, Triethanolamine, und Ethylendinitrilotetraethanol oder deren Alkalisalze.

Erfindungsgemäß bevorzugt sind Pentaerythritol, Dipentaerythritol, Tripentaerythritol.

Erfindungsgemäß ganz besonders bevorzugt sind Dipentaerythritol und Tripentaerythritol

Beispiele aromatischer zyklischer Anhydride der Formel (VII) sind Phthalsäureanhydrid, Trimellytsäureanhydrid oder 1,8-Naphthalsäureanhydrid.

Beispiele heterozyklischer zyklischer Anhydride der Formel (VII) sind Chinolinsäureanhydrid oder Pyrazin-2,3-dicarbonsäureanhydrid.

Beispiele von Doppelbindungen aufweisenden zyklischen Anhydriden der Formel (VII) sind Maleinsäureanhydrid oder Methyltetrahydrophthalsäureanhydrid.

Beispiele aliphatischer zyklische Anhydride der Formel (VII) sind Bernsteinsäureanhydrid, Glutarsäureanhydrid, 3-Methylglutarsäureanhydrid, Hexahydrophthalsäureanhydrid und die zyklischen Anhydride von Adipinsäure, Pimelinsäure, Korksäure, Azelainsäure und Sebacinsäure.

Erfindungsgemäß bevorzugt sind die zyklischen Anhydride Phthalsäureanhydrid, Bernsteinsäureanhydrid oder Glutarsäureanhydrid.

Erfindungsgemäß besonders bevorzugt ist das zyklische Anhydrid Bernsteinsäureanhydrid.

In einer alternativen Ausführungsform handelt es sich bei den Verbindungen der allgemeinen Formel (I) bzw. der davon abgeleiteten Verbindungen (II) bis (V) um die Reaktionsprodukte tri- oder höherfunktioneller Alkohole oder Alkoholate R-(OZ)ₙ der allgemeinen Formel (VI) mit Dicarbonsäuren HO₂C-Y-CO₂H der allgemeinen Formel (VIII) oder mit Säurechloriden ClOC-Y-COCl der allgemeinen Formel (IX) gemäß der folgenden Reaktionsgleichungen: 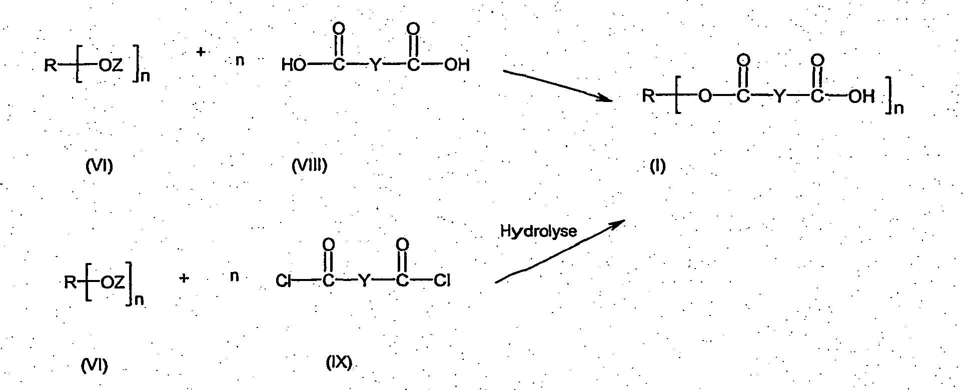 worin R, Y und Z die oben genannten Bedeutungen haben.

Selbstverständlich lassen sich durch diese Alternativverfahren auch die von den Verbindungen der Formel (I) abgeleiteten Verbindungen der Formel (II) bis (V) synthestisieren.

Beim mehrfachfuktionellen Alkohol oder Alkoholat R-(OZ)ₙ der allgemeinen Formel (VI) handelt es sich um Verbindungen wie oben beschrieben.

Bei der Dicarbonsäure handelt es sich um Verbindungen vom Typ HO₂C-Y-CO₂H der Formel (VIII), worin Y die oben genannte Bedeutung hat.

Beispiele aromatischer Dicarbonsäuren der Formel (VIII) sind Phthalsäure, Terephthalsäure, Isophthalsäure und 1,8-Naphthalsäure.

Beispiele heterozyklischer Dicarbonsäuren der Formel (VIII) sind Chinolinsäure und Pyrazin-2,3-dicarbonsäure.

Beispiele von Doppelbindungen aufweisenden Dicarbonsäure der Formel (VIII) sind Fumarsäure, Maleinsäure und Methyltetrahydrophthalsäure.

Beispiele von aliphatischen Dicarbonsäuren der Formel (VIII) sind Bernsteinsäure, Glutarsäure, 3-Methylglutarsäure, Hexahydrophthalsäure, Hexahydroterephthalsäure, Adipinsäure, Pimelinsäure, Korksäure, Azelainsäure und Sebacinsäure.

Beispiele für die Säurechloride der Formel (IX) sind die zu den genannten Säuren korrespondierenden Säurechloride.

Erfindungsgemäß, bevorzugt werden Verbindungen der Formel (I) bzw. (II) bis (V) eingesetzt, die über das Alkohol und das Anhydrid hergestellt werden, gegebenenfalls unter Einsatz der für den Fachmann aus dem Stand der Technik bekannten Katalysatoren.

Die erfindungsgemäß mit den Verbindungen der Formel (I) bzw. der Verbindungen der Formeln (II) bis (V) als Polymerisationskern zu synthetisierenden Polyamide können über die bekannten Verfahren zur Herstellung von Polyamiden aus Aminocarbonsäuren, beispielsweise Aminohexansäure oder durch hydrolytische Ringöffnung von Lactamen, beispielsweise Caprolactam oder Laurinlactam hergestellt werden. Dem Fachmann sind die gängigen Verfahren zur Herstellung von Polyamiden aus der Fachliteratur bekannt. Die erfindungsgemäß mit den Verbindungen der Formel (I) bzw. (II) bis (V) als Polymerisationskern zu synthetisierenden Polyamide können wahlweise diskontinuierlich oder kontinuierlich hergestellt werden.

Beim diskontinuierlichen Prozess werden Lactam, Aminocarbonsäure ggf. Wasser und die esterverknüpfte Kernverbindung (0,03 bis 0,3 mol-% bezogen auf die Gesamtmenge an Monomer) bei atmosphärischem Druck und Temperaturen von 220 bis 280°C polymerisiert. In einem alternativen diskontinuierlichen Prozess werden das Lactam, Wasser (0,5 bis 10 mol-% bezogen auf die Gesamtmenge an Monomer) und die esterverknüpfte Kernverbindung (0,01 bis 0,5 mol-% bezogen auf die Gesamtmenge an Monomer) bei erhöhtem Druck und einer Temperatur von 220 bis 280°C in einem Autoklaven polymerisiert.

Beim kontinuierlichen Prozess werden das flüssige Lactam und die erfindungsgemäße esterverknüpfte Kernverbindung (0,03 bis 0,3mol-% bezogen auf die Gesamtmenge an Monomer) mit ca. 1 - 4 % Wasser von oben einem oder einer Reihe von vertikalen Rohrreaktoren zugeführt. Überschüssiges Wasser wird abdestilliert. Die Polymerisation wird bei Temperaturen zwischen 240°C und 270°C und einer Verweilzeit von 15 h bis zu 30 h durchgeführt. Die Schmelze wird zunächst beispielsweise durch Unterwassergranulierung oder nach vorheriger Abkühlung durch Stranggranulierung granuliert. Eine deutliche Beschleunigung des Verfahrens um einige Stunden lässt sich durch Vorschalten einer Druckstufe erreichen, indem die geschwindigkeitsbestimmende Spaltung des Lactams bei erhöhtem Druck unter ansonsten ähnlichen Bedingungen durchgeführt wird.

Aus thermodynamischen Gründen ist bei dem oben beschriebenen Verfahren der Umsatz begrenzt. So liegen im Gleichgewicht bei 270°C neben Polyamid noch ca. 10 % Restgehalt niedermolekulare Spezies vor, im wesentlichen das Lactam und dessen zyklische Oligomere. Dieser Restgehalt wirkt sich auf weitere Anwendungen störend aus. Daher ist es notwendig, den Restgehalt im Produkt zu minimieren. Dies kann beispielsweise durch wässrige Extraktion geschehen.

Zur weiteren Vervollständigung der Polymerisationsreaktion kann entweder direkt nach dem Polymerisationsschritt oder nach dem Extraktionsschritt eine dem Fachmann bekannte kontinuierliche oder diskontinuierliche Nachkondensation in fester oder flüssiger Phase erfolgen.

Die esterverknüpfte Kernverbindung wird in Mengen von 0,01 bis 0,4 mol-%, bevorzugt 0,01 bis 0,3 mol-% bezogen auf die Gesamtmenge an Monomer eingesetzt.

Die Erfindung soll anhand der folgenden Beispielen näher erläutert werden.

### Beispiel 1 Synthese einer Hexacarbonsäure aus Dipentaerythrit und Bernsteinsäureanhydrid

Bernsteinsäureanhydrid (1,16 kg) wurde vorgelegt und bei 135°C langsam aufgeschmolzen. Getrocknetes Dipentaerythrit (490 g) wurde innerhalb von 7 Minuten zugegeben. Die Reaktion lief exotherm ab und die Temperatur stieg bis 173°C. Die Badtemperatur wurde auf 135°C herabgeregelt, und der Ansatz 3 Stunden bei dieser Temperatur nachgerührt. Der Ansatz wurde schließlich warm in einen Behälter abgefüllt. Nach dem Abkühlen auf Raumtemperatur liegt das Produkt als eine zähe, klebrige Paste vor (1,61 kg, 98 % d. Th.).

### Beispiel 2 Synthese einer Octacarbonsäure aus Tripentaerythrit und Bernsteinsäureanhydrid

Bernsteinsäureanhydrid (513 g) wurde vorgelegt und bei 135°C langsam aufgeschmolzen. Getrockneter Tripentaerythrit (232 g) wurde innerhalb von 10 Minuten zugegeben. Während der Zugabe wurde die Rührgeschwindigkeit auf 270 U/min hochgesetzt. Die Reaktion lief exotherm ab, die Innentemperatur stieg bis 157°C. Der Ansatz wurde 2,5 Stunden nachgerührt und warm in einen Behälter abgelassen. Nach dem Abkühlen auf Raumtemperatur liegt das Produkt als eine zähe, klebrige Paste vor (732 g, 98 % d. Th.).

### Bespiel 3 und 4

Herstellung eines Polyamids aus Caprolactam, Aminohexansäure und einer der Carbonsäureverbindungen aus den Beispielen 1 und 2.

Alle Polymerisationen wurden wie folgt durchgeführt: Caprolactam, Aminohexansäure und eine der Carbonsäuren aus den Beispielen 1 oder 2 werden in den angegebenen Mengen vorgelegt. Die Polymerisationsapparatur wird 3 mal mit Stickstoff gespült, wonach, unter vorsichtigem Rühren, bis 200°C Innentemperatur aufgeheizt wird. Nach dem Erhalten einer klaren Schmelze wird 1 Stunde bei dieser Temperatur vorkondensiert. Anschließend wird bis 270°C Innentemperatur aufgeheizt und 3 Stunden bei dieser Temperatur aufkondensiert. Die Innentemperatur wird schließlich auf 240°C gesenkt und das Produkt durch ein Wasserbad abgesponnen und granuliert. Das Granulat wird 10 Stunden mit heißem Wasser extrahiert um die Restmenge Monomer und Oligomere zu entfernen. Von den Polymeren wurde die relative Lösungsviskosität (Rel. L.V.) in *m*-Kresol bei 25°C bestimmt (c = 0,01 g/ml)

**Tabelle 1**

| Beispiel | Caprolactam (g) | Aminohexansäure (g) | Carbonsäure aus Bsp. 2 (g/mol/%) | Carbonsäure aus Bsp. 3 (g/mol%) | Rel. L.V. |
|---|---|---|---|---|---|
| 3 | 1207 | 201 | 10,4/0,1 | - | 2,4 |
| 4 | 1207 | 201 | - | 14,3/0,1 | 2,3 |

### Beispiele 5 und 6

Compoundierung der Polyamidharze aus den Beispielen 3 und 4 mit Glasfasern und Additiven

Die in den Beispielen 3 und 4 hergestellten Polyamidharze werden wie folgt compoundiert. Es werden eingesetzt:

| | | |
|---|---|---|
| A) | Polyamid nach einem der Beispiele3 oder 4 | 69,6 Gew.-% |
| B) | Glasfasern (CS 7928, Handelsprodukt der Bayer AG) | 30,0 Gew.-% |
| C) | Nukleierungsmittel (5 %-ige Masterbatch von Talkum in PA6) | 0,3 Gew.-% |
| D) | Entformungsmittel (Montanesterwachs): | 0,1 Gew.-% |

Polyamid A) und die Komponenten C) und D) werden gemischt und in einem kontinuierlich arbeitenden Doppelwellenextruder aufgeschmolzen. Über einen zweiten Dosiertrichter werden die Glasfasern (Komponenten B) in die Schmelze dosiert. Die Zylindertemperaturen werden dabei so gewählt, dass Massetemperaturen von 260 bis 300°C eingehalten werden. Der Schmelzestrang wird in Wasser eingeleitet, granuliert und getrocknet. Von den Formmassen werden auf einer Spritzgussmaschine Prüfkörpe für die mechanische Prüfung hergestellt. Während des Spritzgussvorgangs wird der benötigte Fülldruck ermittelt. An den erhaltenen Prüfkörpern werden folgende Prüfungen durchgeführt: Zugversuch nach ISO 527, Biegeversuch nach ISO 178. Die Ergebnisse sind der Tabelle 2 zu entnahmen.

### Vergleichsbeispiele 1 und 2

Analog zu den Beispielen 5 und 6 wird eine Gompoundierung durchgeführt, mit dem Unterschied, dass als Komponente A) ein lineares Polyamid der relativen Lösungsviskosität in *m*-Kresol bei 25°C von 2,4 (VB1) beziehungsweise 2,9 (VB2) genommen wird. Die Ergebnisse sind ebenfalls der Tabelle 2 zu entnehmen, wobei RV für relative Viskosität steht.

**Tabelle 2**

| **Beispiel** | | **5** | **6** | **VB1** | **VB2** |
|---|---|---|---|---|---|
| Polyamid aus Beispiel -> | | 3 | 4 | Linear RV=2,4 | Linear RV=2,9 |
| Fülldruck | | 138 | 139 | 186 | 296 |
| | bar | | | | |
| Δ vs. VB2 | | -53 % | -53 % | -37 % | - |
| | % | | | | |
| Δ vs. VB1 | | -26 % | -26 % | | |
| MVR 260°C, 5 kg, 5 min Vorwärmzeit | cm³/10 min | 90 | 97 | 68 | 24 |
| Δ vs. VB2 | % | +375 % | +404% | +283% | - |
| Δ vs. VB1 | | +132 % | +142% | | |
| | | | | | |
| Zug-Modul | MPa | 9670 | 10038 | 9553 | 9270 |
| Zugfestigkeit | MPa | 185 | 188 | 181 | 176 |
| Biegemodul | MPa | 8400 | 8852 | 8581 | 8210 |
| Biegefestigkeit | MPa | 266 | 278 | 273 | 260 |

Das Verarbeitungsverhalten dieser Polyamide kann in Tabelle 2 aus zwei Kenngrößen abgelesen werden
1) Der Fülldruck beim Spritzgießvorgang - Je besser die Fließfähigkeit der Formmasse, desto niedriger der benötigte Fülldruck beim Spritzgießvorgang und desto besser das Verarbeitungsverhalten.
2) Die Schmelzvolumenrate MVR - Je besser die Fließfähigkeit der Formmasse, desto höher die MVR und desto besser das Verarbeitungsverhalten.

Überraschenderweise zeigen die erfindungsgemäß hergestellten Polyamide eine deutliche Verbesserung der Fließfähigkeit bei nahezu gleichbleibenden mechanischen Eigenschaften und geringem Anteil an Fremdmonomeren.

## Patentansprüche

1. Sternförmig verzweigte Polyamide mit mindestens 3 Polyamidarmen, **dadurch gekennzeichnet, dass** als Polymerisationskern Kernverbindungen mit 3 oder mehr Carbonsäuregruppen und mit einer esterverknüpften Struktur der allgemeinen Formel (I) 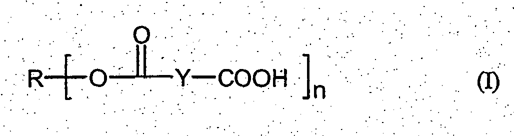 eingesetzt werden, worin
R und Y für aliphatische und/oder aromatische Kohlenstoffreste mit mindestens 2 Kohlen- stoffatomen und gegebenenfalls weiteren Heteroatomen stehen und
n für eine ganze Zahl von 3 bis 10 steht.

2. Sternförmig verzweigte Polyamide gemäß Anspruch 1, **dadurch gekennzeichnet dass** die esterverknüpfte Kernverbindung der Formel (I) das Reaktionsprodukt eines tri- oder höherfunktionellen Alkohols oder Alkoholats der allgemeinen Formel (VI)
R-(OZ)ₙ (VI)
mit einem zyklischen Anhydrid der allgemeinen Formel (VII) 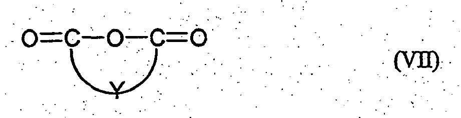 worin
R und Y für aliphatische und/oder aromatische Kohlenstoffeste mit mindestens 2 Kohlen- stoffatomen und gegebenenfalls weitere Heteroatomen stehen,
Z für Wasserstoff oder ein Alkalimetall steht und
n für eine ganze Zahl von 3 bis 10 steht,
ist.

3. Sternförmig verzweigte Polyamide gemäß Anspruch 1, **dadurch gekennzeichnet dass** als esterverknüpfte Kernverbindung der Formel (I) das Reaktionsprodukt eines tri- oder höherfunktionelle Alkohols oder Alkoholats der allgemeinen Formel (VI) R-(OZ)ₙ mit einer Dicarbonsäure der allgemeinen Formel (VIII) oder mit einem Dicarbonsäurechlorid der allgemeinen Formel (IX)
HO CO-Y-COO H (VIII)
bzw. ClCO-Y-COCl (IX)
worin
R und Y für aliphatische und/oder aromatische Kohlenstoffreste mit mindestens 2 Kohlenstoffatomen und gegebenenfalls weiteren Heteroatomen stehen und
n für eine ganze Zahl von 3 bis 10 steht,
eingesetzt wird.

4. Sternförmig verzweigte Polyamide gemäß der Ansprüche 2 oder 3, **dadurch gekennzeichnet, dass** der tri- oder höherfunktionelle Alkohol der Formel (VI) aus der Gruppe Phloroglucin, Pyrogallol, Hydroxyhydrochinon, Phloroglucid, Isobarbitursäure, Cyanursäure, Trioxyisobutan, Glycerin, Diglycerin, Triglycerin, Polyglycerin, Trimethylolethan, Trimethylolpropan, Ditrymethylolethan, Ditrimethylolpropan, Erythrit, Pentaerythrit, Dipentaerythrit, Tripentaerythrit, Galactit, Arabit, Adonit, Mannit, Sorbit, Xylit, Methylglucosid, Trimethanolamine, Triethanolamine oder Ethylendinitrilotetraethanol oder deren Alkoholate gewählt wird.

5. Sternförmig verzweigte Polyamide gemäß Anspruch **dadurch gekennzeichnet dass** das zyklische Anhydrid der Formel (VII) aus der Gruppe Phtalsäureanhydrid, Trimellytsäureanhydrid, 1,8-Naphthalsäureanhydrid, Chinolinsäureanhydrid, Pyrazin-2,3-dicarbonsäureanhydrid, Maleinsäureanhydrid, Methyltetrahydrophthalsäureanhydrid, Bernsteinsäureanhydrid, Glutarsäureanhydrid, 3-Methylglutarsäureanhydrid, Hexahydrophthalsäureanhydrid oder der zyklischen Anhydride Adipinsäure, Pimelinsäure, Korksäure, Azelainsäure oder Sebacinsäure gewählt wird.

6. Sternförmig verzweigte Polyamide gemäß Anspruch 3, **dadurch gekennzeichnet dass** die Dicarbonsäure der Formel (VIII) bzw. das Dicarbonsäurechlorid der Formel (IX) aus der Gruppe von Phthalsäure, Terephthalsäure, Isophthalsäure, Naphthalsäure, Chinolinsäure, Pyrazin-2,3-dicarbonsäure, Fumarsäure, Maleinsäure, Methyltetrahydrophthalsäure, Bernsteinsäure, Glutarsäure, 3-Methylglutarsäure, Hexahydrophthalsäure, Hexahydroterephthalsäure, Adipinsäure, Pimelinsäure, Korksäure, Azelainsäure oder Sebacinsäure oder das jeweils entsprechende Dicarbonsäurechlorid dieser Säuren gewählt wird.

7. Sternförmig verzweigte Polyamide gemäß Anspruch 2, **dadurch gekennzeichnet dass** als Verbindung der Formel (VI) Dipentaerythrit und als Verbindung der Formel (VII) Bernsteinsäureanhydrid eingesetzt wird.

8. Sternförmig verzweigte Polyamide gemäß Anspruch 2 **dadurch gekennzeichnet dass** als Verbindung der Formel (VI) Tripentaerythrit und als Verbindung der Formel (VII) Bernsteinsäureanhydrid eingesetzt wird.

9. Formteile oder Fasern auf Basis sternförmig verzweigter Polyamide mit mindestens 3 Polyamidarmen, **dadurch gekennzeichnet, dass** man Polyamide auf Basis esterverknüpfter Verbindungen der allgememen Formel (I) 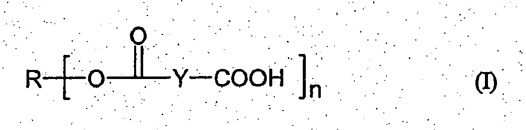 worin R, Y und n die in Anspruch 1 genannten Bedeutungen haben, einsetzt.

10. Verfahren zur Herstellung sternförmig verzweigter Polyamide mit mindestens 3 Polyamidarmen, **dadurch gekennzeichnet, dass** man als Polymerisationskern esterverknüpfte Verbindungen der allgemeinen Formel (I) 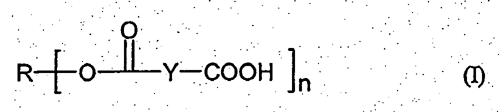 worin R, Y und n die in Anspruch 1 genannten Bedeutungen haben, einsetzt und eine Polymerisation von Aminocarbonsäuren und/oder eine Ringöffnung von Lactamen durchführt.

11. Verfahren gemäß Anspruch 10, **dadurch gekennzeichnet, dass** dieses kontinuierlich oder diskontinuierlich durchgeführt wird.

12. Verwendung der esterverknüpften Verbindungen der allgemeinen Formel (I) 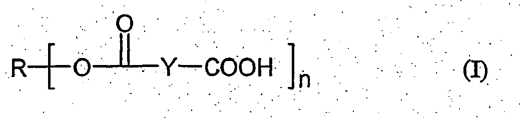 worin R, Y und n die in Anspruch 1 genannten Bedeutungen haben zur Synthese sternförmig verzweigter Polyamide mit mindestens 3 Polyamidarmen.

13. Verwendung der sternförmig verzweigten Polyamide erhältlich nach Anspruch 10 zur Herstellung von Fasern, Formteilen, Extrudaten oder Hohlkörpern.

14. Verbindungen der allgemeinen Formel (II) 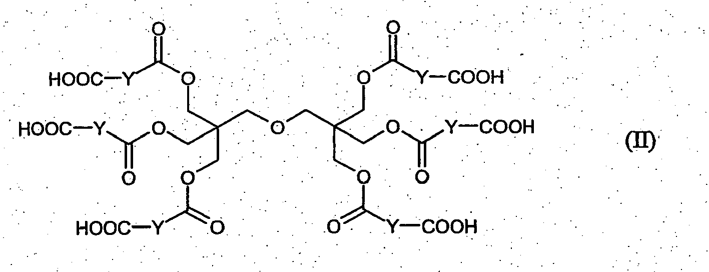 worin
Y für aliphatische und/oder aromatische Kohlenstoffreste mit 2 bis 30 Kohlenstoffatomen und gegebenenfalls weiteren Heteroatomen steht, ausgenommen die Verbindungen
worin
Y für -CH₂CH₂CH₂CH₂- oder für 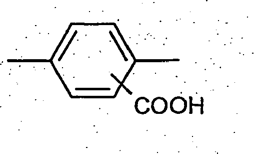 oder für 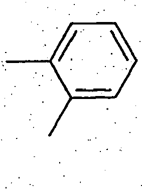 steht.

15. Verbindungen nach Anspruch 14, **dadurch gekennzeichnet, dass** Y für aliphatische Kohlenstoffreste mit 2 bis 30 Kohlenstoffatomen und gegebenenfalls weiteren Heteroatomen steht, ausgenommen die Verbindung worin Y für -CH₂CH₂CH₂CH₂- steht.

16. Sternförmig verzweigte Verbindungen der allgemeinen Formel (III) 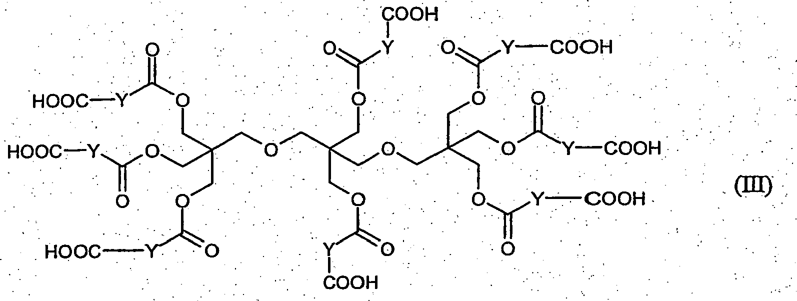 worin Y für aliphatische und/oder aromatische Kohlenstoffreste mit 2 bis 30 Kohlenstoffatomen und gegebenenfalls weiteren Heteroatomen steht.

17. Verbindung der allgemeinen Formel (II) gemäß Anspruch 14, **dadurch gekennzeichnet, dass** diese durch die Formel (IV) dargestellt wird

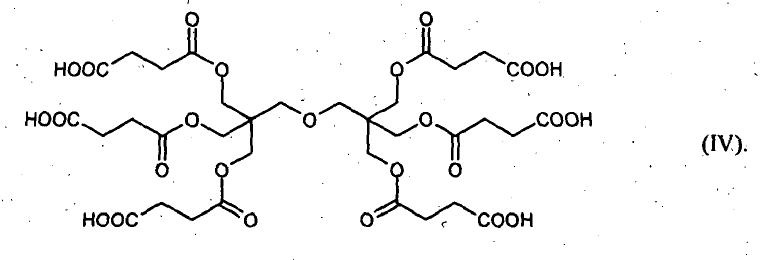

18. Verbindung der allgemeinen Formel (III) gemäß Anspruch 16, **dadurch gekennzeichnet, dass** diese durch die Formel (V) dargestellt wird

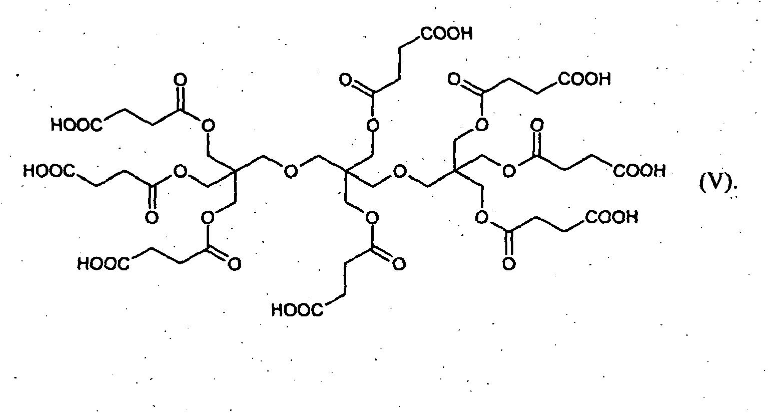

## Claims

1. Star-branched polyamides having at least 3 polyamide arms, **characterized in that** the polymerization core used comprises core compounds having 3 or more carboxylic acid groups and having an ester-linked structure of the general formula (I) 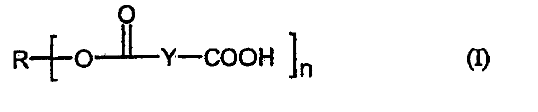 where
R and Y represent aliphatic and/or aromatic hydrocarbyl radicals having at least 2 carbon atoms and optionally further heteroatoms and
n represents an integer from 3 to 10.

2. Star-branched polyamides according to Claim 1, **characterized in that** the ester-linked core compound of the formula (I) is the reaction product of a tri- or higher-functional alcohol or alkoxide of the general formula (VI)
R-(OZ)ₙ (VI)
with a cyclic anhydride of the general formula (VII) 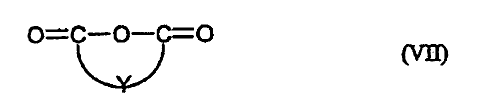 where
R and Y represent aliphatic and/or aromatic hydrocarbyl radicals having at least 2 carbon atoms and optionally further heteroatoms,
Z represents hydrogen or an alkali metal, and
n represents an integer from 3 to 10.

3. Star-branched polyamides according to Claim 1, **characterized in that** the ester-linked core compound of the formula (I) is the reaction product of a tri- or higher-functional alcohol or alkoxide of the general formula (VI) R-(OZ)ₙ with a dicarboxylic acid of the general formula (VIII) or with a dicarbonyl chloride of the general formula (IX)
HO CO-Y-COOH (VIII)
or, respectively,
ClCO-Y-COCl (IX)
where
R and Y represent aliphatic and/or aromatic hydrocarbyl radicals having at least 2 carbon atoms and optionally further heteroatoms, and
n represents an integer from 3 to 10.

4. Star-branched polyamides according to Claims 2 or 3, **characterized in that** the tri- or higher-functional alcohol of the formula (VI) is selected from the group consisting of phloroglucin, pyrogallol, hydroxyhydroquinone, phloroglucide, isobarbituric acid, cyanuric acid, trioxyisobutane, glycerol, diglycerol, triglycerol, polyglycerol, trimethylolethane, trimethylolpropane, ditrimethylolethane, ditrimethylolpropane, erythritol, pentaerythritol, dipentaerythritol, tripentaerythritol, galactitol, arabitol, adonitol, mannitol, sorbitol, xylitol, methylglucoside, trimethanolamines, triethanolamines or ethylenedinitrilotetraethanol or alkoxides thereof.

5. Star-branched polyamides according to Claim 2, **characterized in that** the cyclic anhydride of the formula (VII) is selected from the group consisting of phthalic anhydride, trimellitic anhydride, 1,8-naphthalic anhydride, quinoline acid anhydride, pyrazine-2,3-dicarboxylic anhydride, maleic anhydride, methyltetrahydrophthalic anhydride, succinic anhydride, glutaric anhydride, 3-methylglutaric anhydride, hexahydrophthalic anhydride or the cyclic anhydrides adipic acid, pimelic acid, suberic acid, azelaic acid or sebacic acid.

6. Star-branched polyamides according to Claim 3, **characterized in that** the dicarboxylic acid of the formula (VIII) or the dicarbonyl chloride of the formula (IX) is selected from the group consisting of phthalic acid, terephthalic acid, isophthalic acid, naphthalic acid, quinoline acid, pyrazine-2,3-dicarboxylic acid, fumaric acid, maleic acid, methyltetrahydrophthalic acid, succinic acid, glutaric acid, 3-methylglutaric acid, hexahydrophthalic acid, hexahydroterephthalic acid, adipic acid, pimelic acid, suberic acid, azelaic acid or sebacic acid or the respectively corresponding dicarbonyl chloride of these acids.

7. Star-branched polyamides according to Claim 2, **characterized in that** dipentaerythritol is used as compound of the formula (VI) and succinic anhydride as compound of the formula (VII).

8. Star-branched polyamides according to Claim 2, **characterized in that** tripentaerythritol is used as compound of the formula (VI) and succinic anhydride as compound of the formula (VII).

9. Mouldings or fibres based on star-branched polyamides having at least 3 polyamide arms, **characterized in that** polyamides based on ester-linked compounds of the general formula (I) 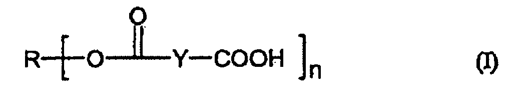 where R, Y and n are each as defined in Claim 1, are used.

10. Process for preparing star-branched polyamides having at least 3 polyamide arms, **characterized in that** ester-linked compounds of the general formula (I) 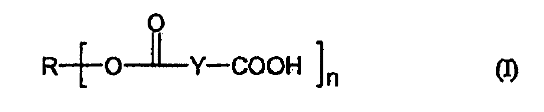 where R, Y and n are each as defined in Claim 1, are used as polymerization core and a polymerization of amino carboxylic acids and/or a ring opening of lactams are/is carried out.

11. Process according to Claim 10, **characterized in that** it is carried out as a continuous operation or as a batch operation.

12. Use of the ester-linked compounds of the general formula (I) 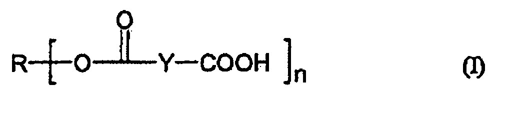 where R, Y and n are each as defined in Claim 1, for synthesis of star-branched polyamides having at least 3 polyamide arms.

13. Use of the star-branched polyamides obtainable according to Claim 10 in the manufacture of fibres, mouldings, extrudates or hollow articles.

14. Compounds of the general formula (II) 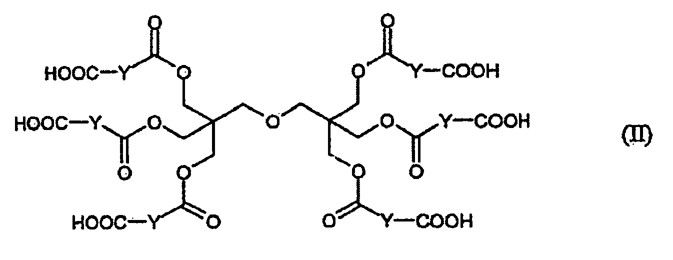 where
Y represents aliphatic and/or aromatic hydrocarbyl radicals having 2 to 30 carbon atoms and optionally further heteroatoms, excepting the compounds
where
Y represents -CH₂CH₂CH₂CH₂- or 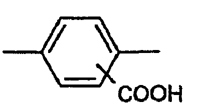 or

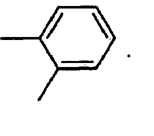

15. Compounds according to Claim 14, **characterized in that** Y represents aliphatic hydrocarbyl radicals having 2 to 30 carbon atoms and optionally further heteroatoms, excepting the compound where Y represents -CH₂CH₂CH₂CH₂-.

16. Star-branched compounds of the general formula (III) 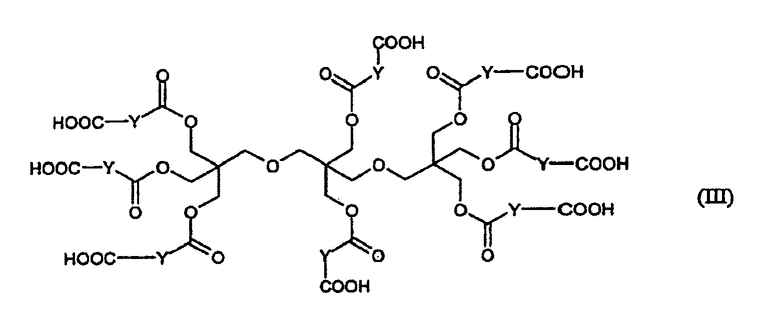 where Y represents aliphatic and/or aromatic hydrocarbyl radicals having 2 to 30 carbon atoms and optionally further heteroatoms.

17. Compound of the general formula (II) according to Claim 14, **characterized in that** it is represented by the formula (IV)

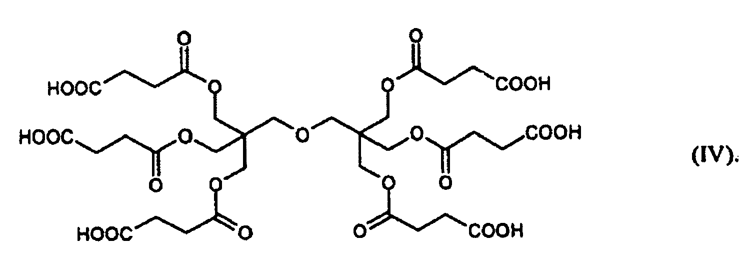

18. Compound of the general formula (III) according to Claim 16, **characterized in that** it is represented by the formula (V)

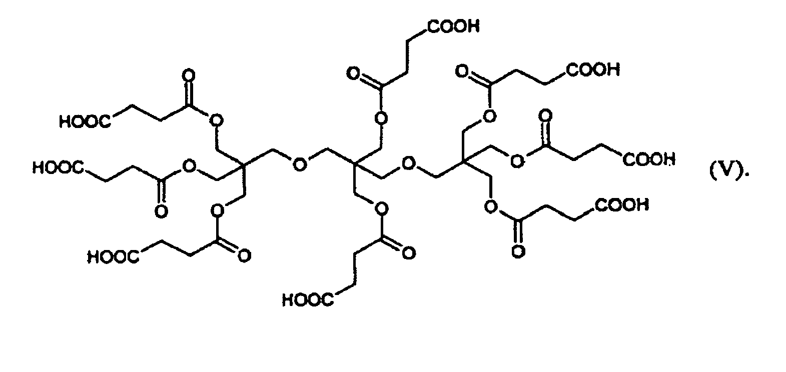

## Revendications

1. Polyamides ramifiés en forme d'étoile présentant au moins 3 branches de type polyamide, **caractérisés en ce qu'**on utilise comme noyau de polymérisation des composés formant le noyau avec 3 groupes acide carboxylique ou plus et avec une structure liée en ester de formule générale (I) 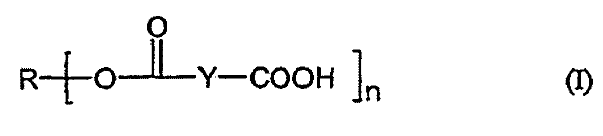 où
R et Y représentent des radicaux carbonés aliphatiques et/ou aromatiques comprenant au moins 2 atomes de carbone et le cas échéant d'autres hétéroatomes et
n vaut un nombre entier de 3 à 10.

2. Polyamides ramifiés en forme d'étoile selon la revendication 1, **caractérisés en ce que** le composé formant le noyau lié en ester de formule (I) est le produit de réaction d'un alcool ou d'un alcoolate trifonctionnel ou de fonctionnalité supérieure de formule générale (VI)
R-(OZ)ₙ (VI)
avec un anhydride cyclique de formule générale (VII) 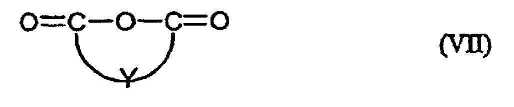 où
R et Y représentent des radicaux carbonés aliphatiques et/ou aromatiques comprenant au moins 2 atomes de carbone et le cas échéant d'autres hétéroatomes,
Z représente hydrogène ou un métal alcalin et
n vaut un nombre entier de 3 à 10.

3. Polyamides ramifiés en forme d'étoile selon la revendication 1, **caractérisés en ce qu'**on utilise comme composé formant le noyau lié en ester de formule (I) le produit de réaction d'un alcool ou d'un alcoolate trifonctionnel ou de fonctionnalité supérieure de formule générale (VI) R-(OZ)ₙ avec un acide dicarboxylique de formule générale (VIII) ou avec un chlorure d'acide dicarboxylique de formule générale (IX)
HO CO-Y-COOH (VIII)
ou
ClCO-Y-COCl (IX)
où
R et Y représentent des radicaux carbonés aliphatiques et/ou aromatiques comprenant au moins 2 atomes de carbone et le cas échéant d'autres hétéroatomes et
n vaut un nombre entier de 3 à 10.

4. Polyamides ramifiés en forme d'étoile selon les revendications 2 ou 3, **caractérisés en ce que** l'alcool trifonctionnel ou de fonctionnalité supérieure de formule (VI) est choisi dans le groupe formé par la phloroglucine, le pyrogallol, l'hydroxyhydroquinone, le phloroglucide, l'acide isobarbiturique, l'acide cyanurique, le trioxyisobutane, le glycérol, le diglycérol, le triglycérol, le polyglycérol, le triméthyloléthane, le triméthylolpropane, le ditriméthyloléthane, le ditriméthylolpropane, l'érythritol, le pentaérythritol, le dipentaérythritol, le tripentaérythritol, le galactitol, l'arabitol, l'adonitol, le mannitol, le sorbitol, le xylitol, le méthylglucoside, la triméthanolamine, la triéthanolamine ou l'éthylènedinitrilotétraéthanol ou leurs alcoolates.

5. Polyamides ramifiés en forme d'étoile selon la revendication 2, **caractérisés en ce que** l'anhydride cyclique de (VII) est choisi dans le groupe formé par l'anhydride de l'acide phtalique, l'anhydride de l'acide trimellitique, l'anhydride de l'acide 1,8-naphtalénique, l'anhydride de l'acide quinoléique, l'anhydride de l'acide pyrazine-2,3-dicarboxylique, l'anhydride de l'acide maléique, l'anhydride de l'acide méthyltétrahydrophtalique, l'anhydride de l'acide succinique, l'anhydride de l'acide glutarique, l'anhydride de l'acide 3-méthylglutarique, l'anhydride de l'acide hexahydrophtalique ou les anhydrides cycliques de l'acide adipique, de l'acide pimélique, de l'acide subérique, de l'acide azélaïque ou de l'acide sébacique.

6. Polyamides ramifiés en forme d'étoile selon la revendication 3, **caractérisés en ce que** l'acide dicarboxylique de formule (VIII) ou le chlorure d'acide dicarboxylique de formule (IX) est choisi dans le groupe formé par l'acide phtalique, l'acide téréphtalique, l'acide isophtalique, l'acide naphtalénique, l'acide quinoléique, l'acide pyrazine-2,3-dicarboxylique, l'acide fumarique, l'acide maléique, l'acide méthyltétrahydrophtalique, l'acide succinique, l'acide glutarique, l'acide 3-méthylglutarique, l'acide hexahydrophtalique, l'acide hexahydrotéréphtalique, l'acide adipique, l'acide pimélique, l'acide subérique, l'acide azélaïque ou l'acide sébacique ou à chaque fois le chlorure d'acide dicarboxylique correspondant de ces acides.

7. Polyamides ramifiés en forme d'étoile selon la revendication 2, **caractérisés en ce qu'**on utilise comme composé de formule (VI) le dipentaérythritol et comme composé de formule (VII) l'anhydride de l'acide succinique.

8. Polyamides ramifiés en forme d'étoile selon la revendication 2, **caractérisés en ce qu'**on utilise comme composé de formule (VI) le tripentaérythritol et comme composé de formule (VII) l'anhydride de l'acide succinique.

9. Pièces façonnées ou fibres à base de polyamides ramifiés en forme d'étoile présentant au moins 3 branches de type polyamide, **caractérisées en ce qu'**on utilise des polyamides à base de composés liés en ester de formule générale (I), 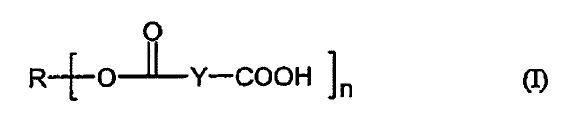 où R, Y et n ont les significations mentionnées dans la revendication 1.

10. Procédé pour la préparation de polyamides ramifiés en forme d'étoile présentant au moins 3 branches de type polyamide, **caractérisé en ce qu'**on utilise comme noyau de polymérisation des composés liés en ester de formule générale (I) 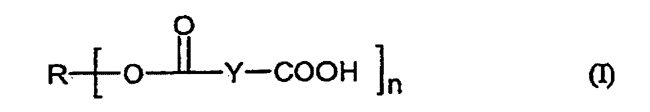 dans laquelle R, Y et n ont les significations mentionnées dans la revendication 1 et on réalise une polymérisation d'acides aminocarboxyliques et/ou une ouverture de cycle de lactames.

11. Procédé selon la revendication 10, **caractérisé en ce que** celui-ci est réalisé de manière continue ou discontinue.

12. Utilisation des composés liés en ester de formule générale (I) 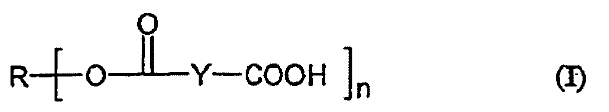 dans laquelle R, Y et n ont les significations mentionnées dans la revendication 1 pour la synthèse de polymères ramifiés en forme d'étoile, présentant au moins 3 branches de type polyamide.

13. Utilisation des polyamides ramifiés en forme d'étoile pouvant être obtenus selon la revendication 10 pour la préparation de fibres, de pièces façonnées, de produits extrudés ou de corps creux.

14. Composés de formule générale (II) 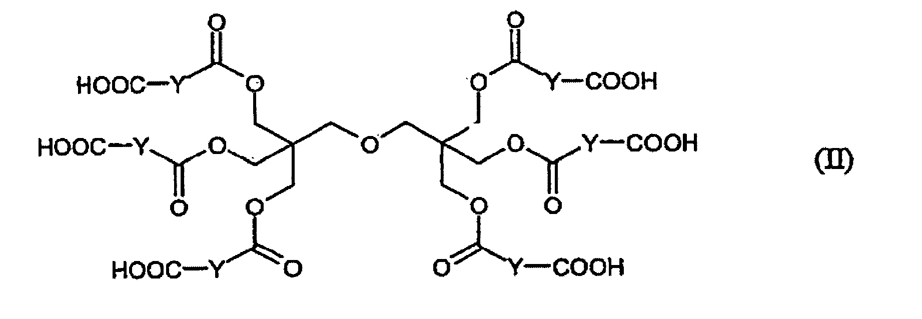 où
Y représente des radicaux carbonés aliphatiques et/ou aromatiques comprenant 2 à 30 atomes de carbone et le cas échéant d'autres hétéroatomes, à l'exception des composés où
Y représente -CH₂CH₂CH₂CH₂- ou 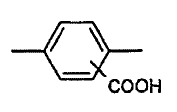
ou

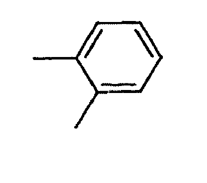

15. Composés selon la revendication 14, **caractérisés en ce que** Y représente des radicaux carbonés aliphatiques comprenant 2 à 30 atomes de carbone et le cas échéant d'autres hétéroatomes, à l'exception des composés où Y représente -CH₂CH₂CH₂CH₂-.

16. Composés ramifiés en étoile de formule générale (III) 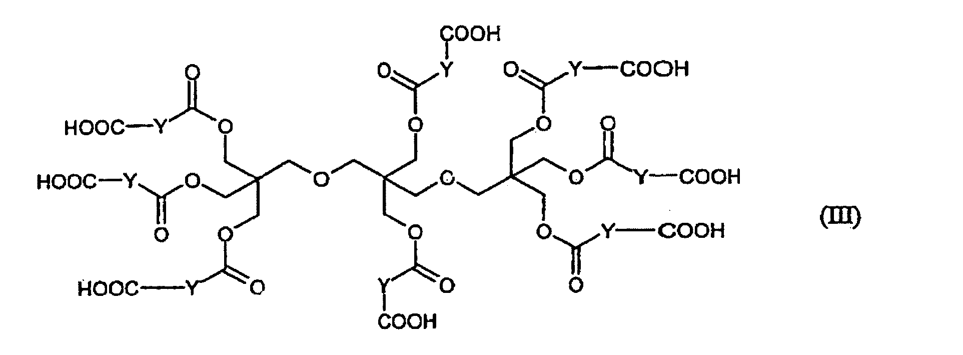 où Y représente des radicaux carbonés aliphatiques et/ou aromatiques comprenant 2 à 30 atomes de carbone et le cas échéant d'autres hétéroatomes.

17. Composé de formule générale (II) selon la revendication 14, **caractérisé en ce qu'**il est représenté par la formule (IV)

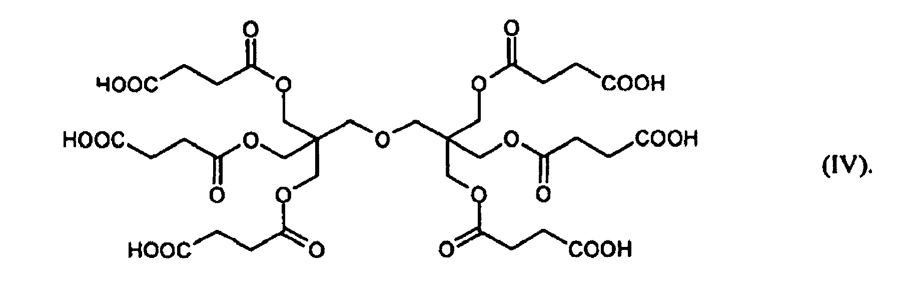

18. Composé de formule générale (III) selon la revendication 16, **caractérisé en ce qu'**il est représenté par la formule (V)
